# EUROPEAN PATENT APPLICATION

(11) **EP 3 023 479 A1**
(43) Date of publication of application: **25.05.2016**
(21) Application number: 14306867.4
(22) Date of filing: 24.11.2014
(51) Int. Cl.: C10G 3/00, B01J 35/10, B01J 23/72, B01J 23/80, B01J 23/06

(54) **Process for the deoxygenation of alcohols and use thereof**

(71) Applicant: Centre National de la Recherche Scientifique, 75016 Paris (FR); Université de Lille 1 Sciences et Technologies, 59655 Villeneuve d'Ascq Cedex (FR)
(72) Inventor: Ordomskiy, Vitaly, 59700 Marcq-en-Baroeul (FR); Khodakov, Andrei, 49170 Croix (FR)
(74) Representative: Goulard, Sophie

(57) **Abstract**

The invention relates to a process for the deoxygenation of an organic compound comprising at least one primary, secondary or tertiary alcohol group and its use thereof.

## Description

The invention relates to a process for the deoxygenation of an organic compound comprising at least one primary, secondary or tertiary alcohol group and its use thereof.

Carbohydrates, bio-oils and other biomass-derived compounds are abundant, renewable resources that offer a very appealing alternative to the use of petroleum-based feedstocks. Indeed, they are able to produce fuels and chemicals that are identical to those produced using petroleum resources but in a biofuel-driven economy, for example with a significant decrease of undesired SO₂ and NOₓ emissions. Biomass encompasses all plant and plant-derived materials as well as animal matter and animal manure. Pyrolysis of biomass involves the heating of the biomass at a temperature of about 500°C with formation as main products of pyrolysis oil, charcoal and gases. The quality of the pyrolysis oil is low due to the high concentration of oxygen containing compounds. Thus, unlike crude petroleum, carbohydrates, bio-oil constituents and other biomass-derived compounds are "overfunctionalized" and contain excess oxygen that must be removed to render them useful as chemicals and fuels. Indeed, the high functionality decreases the stability of the oils and results in polymerization. A direct consequence is the increase of viscosity of bio-oils with time which in turn raises concerns about the feasibility of using bio-oil products as substitutes for petrochemical fuels. In addition to instability, low pH values and the presence of a high water content and ash content are considered problematic. Moreover, the presence of oxygen and water in bio-oil reduces the heating value (i.e. the amount of heat produced by complete combustion of a unit of quantity of bio-oil), and thus their stability.

Consequently, many studies on the deoxygenation of organic compounds having primary and/or secondary alcohol groups have been conducted in order to upgrade (i.e. to increase stability and decrease oxygen content) said biomass, said studies including dehydration to form reactive intermediates such as alkenes or aldehydes and hydrodeoxygenation which is based on the cleavage of C-C and C-O bonds by H₂.

Traditional processes for the deoxygenation of mono- and polyalcohols include at least two stages: a dehydration stage which leads to the transformation of the alcohol into an alkene or an aldehyde (i.e. elimination of H₂O) and a hydrogenation stage to form an alkane or an alcohol which has less oxygen atoms than the starting alcohol. As an example, Murata et al. [React. Kinet. Catal. Lett., 2008, 93, 1, 59-66] have described the deoxygenation of glycerol or propan-1,2-diol into propane. The process comprises a contacting step under H₂ of a solution of glycerol or propan-1,2-diol in water with 5% by weight of a Pt/γ-Al₂O₃ catalyst or a Pt-zeolite catalyst (e.g. Pt/H-ZSM5 catalyst) and induces several dehydration/hydrogenation cycles. However, this process comprises several steps and leads to low selectivities since only up to about 28.7% of propane is formed. Indeed, this process also produces by-products such as methane, ethane and C₄-C₇ hydrocarbons due to the high reactivity of intermediate alkene or aldehyde species over acid and metallic sites.

Schlaf et al. [Adv. Synth. Catal., 2009, 351, 789-800] have described the catalytic deoxygenation of propan-1,2-diol into n-propanol. The propan-1,2-diol is contacted at 110°C under H₂ with a solution of trifluoromethanesulfonic acid in sulfolane containing 0.5% by mole of a ruthenium catalyst {[Cp*Ru(CO)₂]₂(µ-H)}⁺OTf⁻ [bis(dicarbonyl)(µ-hydrido)(pentamethylcyclopentadiene)ruthenium trifluoromethanesulfonate]. The catalytic deoxygenation comprises a first step of acid-catalyzed dehydration to produce the intermediate propionaldehyde and a second step of catalytic hydrogenation of the carbonyl bond of the aldehyde to generate *n*-propanol. However, although such a process has improved selectivity (up to about 54% selectivity), it involves homogeneous catalysis which does not allow the easy recovering of the catalyst. Further, noble metal-based catalysts are too expensive and cannot be used on a big scale without dramatically increasing the production cost of a process.

Condensation of primary alcohols with formation of long chain alcohols is also the subject of intensive research activity. As an example, Dowson et al. [Angew. Chem. Int. Ed., 2013, 52, 9005-9008] have described the catalytic conversion of readily available ethanol into butanol according to the Guerbet reaction, a well-known reaction which enables facile C-C bond formation with normally unreactive alcohols. The conversion comprises a first step of dehydrogenation of ethanol into acetaldehyde through a β-elimination and a second step of condensation into butanol. The two-step process is performed by contacting ethanol at 150°C with a sodium ethanolate base and 0.1% by mole of a ruthenium bis(diphenylphosphanyl)methane catalyst. The conversion is about 20% and the selectivity about 94%. Here again, the process involves homogeneous catalysis which does not allow the easy recovering of the catalyst and noble metal-based catalysts are too expensive to contemplate an industrial process. Further, the primary alcohol is generally difficult to dehydrogenate and the condensation is known to lead to oligomeric and polymeric by-products due to high reactivity of intermediate aldehyde species.

Sad et al. [J. Am. Chem. Soc., 2011, 133, 20384-20398] have recently described the selective removal of oxygen from 1,3-propane-diol by contacting an aqueous solution of 1,3-propane-diol with a copper-based catalyst under carbon monoxide. The process is based on the *in situ* formation of H₂ *via* the water-gas shift reaction (also called WGS reaction) which produces H₂ by reaction of carbon monoxide with water. However, propanal is the predominant product obtained and is not enough stable since it can be highly reactive in subsequent reactions of condensation. Further, the *in situ* formation of H₂ is difficult to control in terms of released and available amount.

Consequently, an alternative deoxygenation method of organic compounds comprising primary and/or secondary and/or tertiary alcohol groups that provides stable products, high selectivities without the above disadvantages is highly desirable, in particular for the manufacture of high quality biofuels.

More particularly, the aim of the present invention is to provide a simple, economic and efficient deoxygenation method which can lead to alkanes, long chain alcohols or mixtures thereof from commonly available alcohols, and where the formation of by-products is limited and the catalyst can be easily recovered.

A first object of the present invention is a deoxygenation method comprising at least one step i) of contacting an organic compound (I) with carbon monoxide in the presence of a metal-based catalyst to produce a deoxygenated organic compound (II),
wherein:
- said method is performed at a temperature ranging from about 100°C to 400°C and under a pressure ranging from about 1 to 100 atmospheres,
- said organic compound (I) comprises at least one primary, secondary or tertiary alcohol group,
- said metal-based catalyst comprises a metal selected from Cu, Ag, Pd, Pt, Ru, Ni and mixtures thereof, and
- said organic compound (I) is used as the solvent of said step i) or is dissolved in an inert solvent prior to step i).

The deoxygenation method of the present invention allows the removal of oxygen atoms in only one step and provides good selectivities. In addition, the method is simple, economical and does not lead to undesired by-products compared to conventional processes. Moreover, the method of the present invention does not require either the use of external H₂ which is a costly reactant, or the *in situ* formation of H₂.

The process of the present invention involves the cleavage of at least one C-O bond and the removal of at least one oxygen atom from a primary, secondary or tertiary alcohol group leading to the release of CO₂.

More particularly, the process involves the direct selective synthesis of alkanes or long-chain alcohols depending of the nature of the alcohol group of organic compound (I) (i.e. primary, secondary or tertiary alcohol group).

According to a preferred embodiment of the invention, step i) is performed at a temperature ranging from about 150°C to 300°C, and more preferably from about 150°C to 250°C.

According to a preferred embodiment of the invention, step i) is conducted at a pressure ranging from about 1 to 80 atmospheres, and more preferably from about 5 to 40 atmospheres.

Step i) is usually carried out for several hours, for example from about 5h to 48h, and preferably from about 10h to 24h.

Within the meaning of the present invention, the term "inert solvent" means that the solvent dissolves the organic compound (I) but does not take part of the reaction in step i). In other words, it does not react with organic compound (I) or carbon monoxide or the metal-based catalyst.

The inert solvent can be chosen from hydrocarbons such as alkanes (e.g. dodecane) or polar solvents such as dimethyl sulfoxide (DMSO), ionic liquids (e.g. 1-butyl-3-methylimidazolium chloride) and mixtures thereof.

In a preferred embodiment, the organic compound (I) is the solvent of step i). Thus, step i) is carried out without any additional solvent.

In this preferred embodiment, the organic compound (I) has preferably a melting point below 150°C, and more preferably below 100°C.

It is noted that in the method of the present invention, the carbon monoxide reacts directly with organic compound (I). Carbon monoxide is thus a reactant "as such" and is not used to produce H₂ *in situ* according to a WGS reaction.

Thus, step i) is preferably performed under anhydrous conditions (i.e. without any presence of water) so as to avoid the *in situ* production of H₂ *via* the WGS reaction.

Organic compound (I) can be selected from monoalcohols (i.e. organic compounds comprising a single alcohol group) and polyalcohols (i.e. an organic compound comprising a plurality of alcohol groups).

Polyalcohols can be chosen from polymeric polyalcohols, non-polymeric polyalcohols, polymeric carbohydrates and non-polymeric carbohydrates.

The monoalcohols (respectively the polyalcohols) can further comprise other chemical groups containing oxygen atom(s) such as ether groups and/or ester groups.

The polyalcohol preferably comprises from 2 to 50 alcohol groups.

Examples of monoalcohols that can be used as organic compound (I) are ethanol, propanol, *iso*-propanol, 1-butanol, 2-butanol or *tert*-butanol.

Examples of polyalcohols that can be used as organic compound (I) are glycerol, 1,2-propanediol, 1,3-propanediol, sorbitol, monosaccharides such as glucose, fructose or galactose, disaccharides such as sucrose, lactose or maltose, or polysaccharides such as cellulose.

When the organic compound (I) is a monoalcohol, it is preferably dissolved in a hydrocarbon as the inert solvent.

When the organic compound (I) is a polyalcohol, it is preferably dissolved in a polar solvent as the inert solvent.

In a preferred embodiment of the invention, the organic compound (I) further comprises from 2 to 40 carbon atoms.

When organic compound (I) is a monoalcohol, it can be selected from:
- organic compounds responding to the following formula (I-a): CₓH₂ₓ₊₁(CHOH)C_{y}H_{2y+1} in which x and y are identical or different, x ≥ 1, y ≥ 1 and (x+y) ranges from 2 to 39, and preferably from 2 to 19,
- organic compounds responding to the following formula (I-b): CₙH₂ₙ₊₁(OH) in which n ranges from 2 to 40, and preferably from 2 to 20, and
- organic compounds responding to the following formula (I-c): CᵤH₂ᵤ₊₁(COH)CᵥH₂ᵥ₊₁C_{z}H_{2z+1} in which u, v and z are identical or different, u ≥ 1, v ≥ 1, z ≥ 1 and (u+v+z) ranges from 3 to 39, and preferably from 3 to 19.

Organic compounds (I-a) are preferably selected from *iso*-propanol and 2-butanol.

Organic compounds (I-b) are preferably selected from ethanol, propanol and 1-butanol.

Organic compound (I-c) is preferably *tert*-butanol.

In a first variant, compound (I-a) is used as organic compound (I) in step i). Thus, the method of the present invention leads to an alkane responding to the formula (II-a): C_{x+y+1}H_{2x+2y+4}, in which x and y have the same definition as for compound (I-a).

In a second variant, compound (I-b) is used as organic compound (I) in step i). Thus, the method of the present invention leads to a long-chain alcohol responding to the formula (II-b): C₂ₙH₄ₙ₊₁(OH), in which n has the same definition as for compound (I-b).

In a third variant, compound (I-c) is used as organic compound (I) in step i). Thus, the method of the present invention leads to an alkane responding to the formula (II-c): C_{u+v+z+1}H_{2u+2v+2z+4}, in which u, v and z have the same definition as for compound (I-c).

Carbon monoxide is preferably used in an amount corresponding to at least the stoichiometric amount calculated from the oxygen content of the organic compound (I) (i.e. for the full conversion of organic compound (I)).

In a preferred embodiment, carbon monoxide is used in an amount such that the molar ratio [number of moles of carbon monoxide/{number of alcohols groups in the organic compound (I) x number of moles of organic compound (I)}] ranges from 0.1 to 10, and preferably from 0.1 to 2.

The metal-based catalyst can have a metal surface area ranging from about 3 to 50 m²/g, and preferably from about 5 to 35 m²/g.

The metal surface area is calculated by hydrogen (for Pt-, Ni- and Ru-based catalysts), carbon monoxide (for Pd- and Pt-based catalysts) or N₂O adsorption (for Cu-based catalysts) at different partial pressures, resulting in a chemisorption isotherm.

In the present invention, the metal surface area is measured with a TriStar 3000 gas adsorption analyzer instrument commercialized by Micromeritics.

The metal-based catalyst of step i) can be present in an amount ranging from about 0.1% to 50% by weight, preferably from about 0.1% to 20% by weight, and more preferably from about 0.1% to 10% by weight, with respect to the total weight of organic compound (I).

The metal-based catalyst is preferably a copper-based catalyst (i.e. a catalyst comprising at least Cu as the metal).

The metal-based catalyst can be supported on a carrier selected from silica, alumina, carbon, zinc oxide, zinc oxide alumina, mesoporous silica alumina, clays, calcium carbonate, aluminum hydrocalcite and magnesium hydrocalcite.

In one preferred embodiment, the metal-based catalyst is a copper-based catalyst supported on a silica, alumina, zinc oxide, zinc oxide alumina or mesoporous silica alumina carrier.

A suitable metal-based catalyst can be Cu-ZnO-Al₂O₃ or Cu-ZnO.

Such catalysts are well-known by a person skilled in the art and can be prepared according to the method described in Ginés et al. [Applied Catalysis A: General, 1995, 131, 283-296].

Cu-ZnO-Al₂O₃ is preferred.

Among Cu-ZnO-Al₂O₃ catalysts, the ones having a Cu/Zn molar ratio ranging from about 1 to 5, and a Cu/Al molar ratio ranging from about 5 to 10 are advantageously used.

The carbon monoxide can be produced according to step i₀) prior to step i). Methods of production of carbon monoxide are well-known in the art.

An advantageous method can be the production of carbon monoxide from a carbonaceous fuel gas comprising coke, anthracite or other carbonaceous material. Air is generally passed over the red-hot carbonaceous fuel and carbon monoxide is produced. The reaction is exothermic and proceeds as follows:

2C + O₂ + 3.73 N₂ → 2CO+ 3.73 N₂

The method of the present invention can be a continuous process. Thus, the carbon monoxide is continuously delivered or synthesized to react with organic compound (I) in step i).

The method of the present invention can further comprises after step i), a step ii) of purification of deoxygenated organic compound (II).

Step ii) can be performed by distillation, extraction or evaporation.

The method of the present invention can further comprises after step i) or after step ii), a step iii) of the metal-based catalyst recovering, preferably by filtration.

A second object of the present invention is the use of the process according to the first object of the present invention to upgrade (i.e. improve quality by increasing stability and decreasing oxygen content) pyrolysis oil or biomass-derived products (e.g. by transformation into fuel).

### EXAMPLES

The starting materials used in the examples which follow, are listed below:
- Cu(NO₃)₂.3H₂O, copper nitrate, 98% purity, Sigma Aldrich;
- Zn(NO₃)₂.6H₂O, zinc nitrate, 98% purity, Sigma Aldrich;
- Al(NO₃)₂.9H₂O, aluminum nitrate, 98.5% purity, Sigma Aldrich;
- Na₂CO₃, calcium carbonate, 99% purity, Janssen Chimica;
- Carbon monoxide, 99.9% purity, Air Liquid;
- Ethanol, 99% purity, Sigma Aldrich;
- 2-Butanol, 99.5% purity, Sigma Aldrich.

These starting materials were used as received from the manufacturers, without additional purification.

The conversion (conv.) of organic compound (I) was calculated by using the following equation: conv. = (I_{before}-I_{after})/I_{before} x 100%, where I_{before} and I_{after} are respectively the amount (in mole) of organic compound (I) in the reactor before and after the reaction.

The amount (in mole) of organic compound (I) was calculated by using a HPLC equipped with refractive index and UV-Vis detectors and a BIO-RAD Aminex HPX-87H column commercialized by Shimadzu.

The selectivities (S) of products including deoxygenated organic compound (II) were calculated by using the following equation: S = C_{product}/(C_{Ibefore}-C_{Iafter}) x 100%, where C_{product} is the amount of carbon (in mole) in the product and C_{Ibefore} and C_{Iafter} are respectively the amounts of carbon (in mole) in organic compound (I) before and after reaction.

The amounts (in mole) of carbon in the organic compound (I) as well as in the product were calculated by using a 450-GC instrument commercialized by Bruker.

### EXAMPLE 1

### 1) Preparation of a metal-based catalyst CZA-1

A metal nitrate aqueous solution containing 14.4 g of Cu(NO₃)₂.3H₂O, 8.9 g of Zn(NO₃)₂.6H₂O and 3.7 g of Al(NO₃)₃.9H₂O in 100 ml of water; and an aqueous solution containing 10.5 g of Na₂CO₃ in 100 ml of water were simultaneously added to a reaction vessel containing 10 ml of deionized water to obtain a suspension. The Na₂CO₃ solution had a concentration of about 1.0 mol/l and the metal nitrate solution had a concentration in [Cu²⁺] +[Zn²⁺] + [Al³⁺] of about 1.0 mol/l.

The suspension was continuously stirred and kept at the desired pH of about 7 by adjustment of the relative flow rates of the two solutions. The suspension was aged under stirring at about 70°C for about 1h to obtain a precipitate. The precipitate was filtered off, repeatedly washed with sufficient amounts of deionized water to remove residual sodium ions, dried at about 110°C overnight and then finally calcined at about 350°C in flowing air for 6h yielding a copper-based precursor catalyst supported on alumina and zinc oxide responding to the formula: CuO-ZnO-Al₂O₃ (abbreviated as CZA).

The catalyst precursor CZA had a Cu:Zn:Al molar ratio of 60:30:10 with a Cu/Zn molar ratio of 2 and a Zn/Al molar ratio of 3.

The catalyst precursor CZA had a copper surface area of about 30 m²/g.

Then, 0.5 g of the catalyst precursor CZA was reduced *in situ* in a batch reactor at about 250 °C under a H₂ pressure of about 5 bars during about 10h to obtain an activated catalyst CZA-1 Cu-ZnO-Al₂O₃.

### 2) Deoxygenation of 2-butanol

The deoxygenation of 2-butanol was performed by contacting 25 g of 2-butanol with 0.5 g of the catalyst CZA-1 prepared in example 1.1) under CO (molar ratio of CO/2-butanol = 0.5) (method A) or under N₂ (method B) at a temperature of about 240°C and a pressure of about 30 atmospheres during 24h.

Method A is part of the invention, whereas method B is not part of the invention since no carbon monoxide is used.

The Table 1 below represents the 2-butanol conversion (in %) and the proportions of the products respectively obtained according to method A and method B.

**TABLE 1**

| | **Gas** | **2-butanol conv. mole %** | **Selectivity to products mole %** | | | | |
|---|---|---|---|---|---|---|---|
| | | | *n-butane* | *isobutane* | *methylethylketone* | *octanol* | *isooctanol* |
| **A** | CO | 27 | 72 | 1.8 | 18 | 4.5 | 2 |
| **B⁽*⁾** | N₂ | 43 | 3 | 1.2 | 92 | 0 | 0 |

| | | | | | | | |
|---|---|---|---|---|---|---|---|
| (*) not part of the invention | | | | | | | |

The 2-butanol might dissociate on the surface of the metal-based catalyst with formation of alkyl and OH groups. Then, a water-gas shift reaction might occur on said surface by interaction of carbon monoxide with the OH group, resulting in the major formation of an alkane (*n*-butane) and carbon dioxide CO₂. The results were reproducible.

Table 1 shows that in the presence of carbon monoxide, the 2-butanol is selectively transformed into *n*-butane with a high selectivity of about 72%, whereas without the presence of CO (use of N₂), only traces of *n*-butane are present and the main product is methylethylketone which is formed by a dehydrogenation mechanism. Thus, the method of the present invention (method A) allows the selective transformation of secondary alcohols into alkanes and relies on the active participation of CO in the removal of oxygen atom in said secondary alcohol.

It is noted that the method of the present invention allows the formation stable products such as deoxygenated compounds (n-butane, isobutane) and long-chain alcohols (octanol, isooctanol) with a total selectivity of about 82%.

### EXAMPLE 2

The deoxygenation of ethanol was performed by contacting 25 g of ethanol with 0.5 g of the catalyst CZA-1 prepared in example 1.1) under CO (molar ratio of CO/ethanol = 0.3) (method C) or under N₂ (method D) at a temperature of about 240°C and a pressure of about 30 atmospheres during 24h.

Method C is part of the invention, whereas method D is not part of the invention since no carbon monoxide CO is used.

The Table 2 below represents the ethanol conversion (in %) and the proportions of the products respectively obtained according to method C and method D.

**TABLE 2**

| | **Gas** | **Ethanol conv. mole %** | **Selectivity to products mole %** | | | | |
|---|---|---|---|---|---|---|---|
| | | | *ethane* | *n-butanol* | *ethylacetate* | *butylacetate* | *diethylether* |
| **C** | CO | 27 | 11 | 63 | 19.2 | 6.1 | 0.8 |
| **D⁽*⁾** | N₂ | 32 | 0.4 | 4 | 91 | 0 | 0 |

| | | | | | | | |
|---|---|---|---|---|---|---|---|
| (*) not part of the invention | | | | | | | |

A molecule of ethanol deoxygenates and reacts with another molecule of ethanol. The results were reproducible.

Table 2 shows that in the presence of carbon monoxide, the ethanol is selectively transformed into n-butanol with a high selectivity of about 63%, whereas without the presence of CO (use of N2), only traces of n-butanol are present and the main product is ethylacetate. Thus, the method of the present invention (method C) allows the transformation of primary alcohols into long-chain alcohols and relies on the active participation of CO in the removal of oxygen atom in said primary alcohol.

Moreover, (Bio)-ethanol can be easily obtained by the fermentation of sugar-containing crops and used as a starting material (i.e. organic compound (I)) in the method of the present invention to produce n-butanol as described above. Compared to ethanol which has a lower energy density (70% that of gasoline) and is corrosive, 1-butanol has fuel properties that more resemble those of gasoline and can alleviate many of the problems associated with ethanol. Indeed, n-butanol is essentially noncorrosive, its energy density is about 90% that of gasoline and is now considered as an advanced biofuel.

## Claims

1. Deoxygenation method comprising at least one step i) of contacting an organic compound (I) with carbon monoxide in the presence of a metal-based catalyst to produce a deoxygenated organic compound (II),
wherein:
- said method is performed at a temperature ranging from 100°C to 400°C and under a pressure ranging from 1 to 100 atmospheres,
- said organic compound (I) comprises at least one primary, secondary or tertiary alcohol group,
- said metal-based catalyst comprises a metal selected from Cu, Ag, Pd, Pt, Ru, Ni and mixtures thereof, and
- said organic compound (I) is used as the solvent of said step i) or is dissolved in an inert solvent prior to step i).

2. Deoxygenation method according to claim 1, wherein step i) performed at a temperature ranging from 150°C to 300°C.

3. Deoxygenation method according to claim 1 or claim 2, wherein step i) is conducted at a pressure ranging from 1 to 80 atmospheres.

4. Deoxygenation method according to any one of claims 1 to 3, wherein step i) is carried out for several hours.

5. Deoxygenation method according to any one of claims 1 to 4, wherein the inert solvent is chosen from hydrocarbons, polar solvents and mixtures thereof.

6. Deoxygenation method according to any one of claims 1 to 5, wherein the organic compound (I) is the solvent of step i).

7. Deoxygenation method according to claim 6, wherein the organic compound (I) has a melting point below 150°C.

8. Deoxygenation method according to any one of claims 1 to 7, wherein step i) is performed under anhydrous conditions.

9. Deoxygenation method according to any one of claims 1 to 8, wherein the organic compound (I) is selected from monoalcohols and polyalcohols.

10. Deoxygenation method according to any one of claims 1 to 9, wherein the organic compound (I) is a monoalcohol selected from:
- organic compounds responding to the following formula (I-a): CₓH₂ₓ₊₁(CHOH)C_{y}H_{2y+1} in which x and y are identical or different, x ≥ 1, y ≥ 1 and (x+y) ranges from 2 to 39, and preferably from 2 to 19,
- organic compounds responding to the following formula (I-b): CₙH₂ₙ₊₁(OH) in which n ranges from 2 to 40, and preferably from 2 to 20, and
- organic compounds responding to the following formula (I-c): CᵤH₂ᵤ₊₁(COH)CᵥH₂ᵥ₊₁C_{z}H_{2z+1} in which u, v and z are identical or different, u ≥ 1, v ≥ 1, z ≥ 1 and (u+v+z) ranges from 3 to 39, and preferably from 3 to 19.

11. Deoxygenation method according to any one of claims 1 to 10, wherein carbon monoxide is used in an amount corresponding to at least the stoichiometric amount calculated from the oxygen content of the organic compound (I).

12. Deoxygenation method according to any one of claims 1 to 11 wherein the metal-based catalyst has a metal surface area ranging from 3 to 50 m²/g.

13. Deoxygenation method according to any one of claims 1 to 12, wherein the metal-based catalyst of step i) is present in an amount ranging from 0.1% to 50% by weight with respect to the total weight of organic compound (I).

14. Deoxygenation method according to any one of claims 1 to 13, wherein the metal-based catalyst is a copper-based catalyst.

15. Deoxygenation method according to any one of claims 1 to 14, wherein the metal-based catalyst is supported on a carrier selected from silica, alumina, carbon, zinc oxide, zinc oxide alumina, mesoporous silica alumina, clays, calcium carbonate, aluminum hydrocalcite and magnesium hydrocalcite.

16. Deoxygenation method according to any one of claims 1 to 15, wherein the metal-based catalyst is Cu-ZnO-Al₂O₃ or Cu-ZnO.

17. Deoxygenation method according to any one of claims 1 to 16, wherein it further comprises after step i), a step ii) of purification of deoxygenated organic compound (II).

18. Deoxygenation method according to claim 17, wherein it further comprises after step i) or after step ii), a step iii) of the metal-based catalyst recovering.

19. Use of the deoxygenation method as defined in any one of claims 1 to 18, to upgrade pyrolysis oil or biomass-derived products.
